# FASCICULE DE BREVET EUROPEEN

(11) **EP 0 512 973 B1**
(45) Date de publication et mention de la délivrance du brevet: **20.09.1995**
(21) Numéro de dépôt: 92870067.3
(22) Date de dépôt: 04.05.1992
(51) Int. Cl.: F16L 59/12, E04F 13/08, F16B 19/10, F16B 5/04

(54) **Dispositif de fixation**
Befestigungsvorrichtung
Attachment device

(30) Priorité: 03.05.1991 BE 9100407
(43) Date de publication de la demande: 11.11.1992
(73) Titulaire: CLIMATECH INTERNATIONAL S.A., B-1332 Genval (BE)
(72) Inventeur: Gohy, François, B-1332 Genval (BE)
(74) Mandataire: Plucker, Guy

(56) Documents cités:
- DE-A- 3 907 120
- US-A- 2 972 274
- US-A- 4 264 995
- US-A- 4 519 736
- Documentation HAIRFIX

## Description

La présente invention concerne un dispositif de fixation.

On connaît déjà des systèmes de fixation permettant notamment de fixer des couches isolantes sur des gaines de conditionnement d'air. Dans ces systèmes, une tige pointue est montée sur une tête enduite d'une couche autocollante sur le côté opposé à la pointe. De telles tiges sont fixées, dressées sur la gaine de conditionnement d'air et le matelas isolant y est appliqué. Une rondelle est enfilée à frottement dur sur chaque tige et l'extrémité de la tige qui dépasse l'isolant est laissée en place, éventuellement après l'avoir repliée sur elle-même.

On connaît également des systèmes de fixation d'isolants sur les toitures. Dans ce cas, l'isolant est d'abord placé sur le support et couvert par un revêtement d'étanchéité.

Pour ce genre de réalisation, il existe des systèmes de fixation par vis ou rivets.

Toutefois avec ces systèmes, le revêtement d'étanchéité est souvent perforé par les têtes de vis et l'on doit assurer l'étanchéité en plaçant, par après, des capsules ou autres sur les têtes de vis pour protéger l'isolant.

On connaît également des systèmes de fixation qui tentent de supprimer le risque de perforation du revêtement d'étanchéité au droit de la fixation en utilisant des vis qui sont plus courtes que l'épaisseur de l'isolation. Dans ces systèmes, un fourreau plus grand que la vis est placé sur l'isolant, puis la vis est mise en place par un outil de pose spécial et le trou du fourreau est obturé par une capsule. Dans les deux systèmes ci-dessus, l'isolant est étendu sur le support, la fixation se faisant par après, ce qui a comme conséquence que la vis peut être fixée par inadvertance à un endroit inadéquat. D'autre part, le support est toujours percé par les vis ou rivets.

Pour éviter ce genre de problème un système de fixation sur pointes est préférable. Toutefois, dans ce cas, les extrémités des fixations dépassent l'isolant et le revêtement d'étanchéité est perfore.

On connaît également une fixation de la marque HAIRFIX® qui se compose d'un embout pointu amovible pour la fixation de l'isolant, d'une vis et d'une rondelle métallique de répartition à cuvette et d'un corps en polyamide spécialement conçu pour permettre la fixation de l'isolant sans perçage du support. Toutefois ce système a besoin d'un support spécialement conçu pour recevoir de petites queues d'aronde pour la mise en place des fixations et on ne peut pas l'utiliser sur tout support que l'on désire isoler.

La demande de brevet allemand DE-A-3907120 décrit notamment un dispositif de fixation pour couches isolantes. Dans une forme de réalisation particulière de l'invention, le dispositif comporte une broche et une douille. La broche est munie à une de ces extrémités d'une rondelle, l'autre extrémité étant munie de nervures disposées perpendiculairement à l'axe de la broche, sur lesquelles la douille est apte à être fixée.

Avec ce dispositif on n'obtient pas une surface plane, le crochet 28 dépasse de la couche isolante.

De plus ce dispositif ne comporte pas de pointe suffisamment pointue que pour percer des couches isolantes dures.

Un autre inconvénient de ce dispositif est que les deux parties du dispositif ont une longueur inférieure à l'épaisseur de la couche isolante; ce qui a pour conséquence, comme pour les systèmes de fixation précédemment décrits, qu'une fois la couche isolante placée, et que la 2ème partie du dispositif doit être enfoncée pour venir bloquer le dispositif, celle-ci peut être fixée par inadvertance à un endroit inadéquat, puisque la 1ère partie n'est plus visible.

La présente invention a pour but de remédier à ces inconvénients par un système de fixation sur pointes qui est simple, économique et qui peut être placé sur tout support sans endommager ni le support ni le revêtement d'étanchéité.

L'invention a pour objet un dispositif de fixation comportant une tige pourvue d'une pointe à une de ses extrémités et pourvue à son autre extrémité d'un moyen apte à le fixer sur un support; ce dispositif comporte en outre
- une protubérance solidaire de la tige et située entre les deux extrémités de celle-ci, cette protubérance étant de section transversale supérieure à la section que la tige présente dans la zone comprise entre la protubérance et la pointe;
- une zone de rupture située à un endroit prédéterminé entre ladite protubérance et la pointe, qui présente, par rapport au restant de la tige, une résistance à la rupture moindre;
- un organe de blocage comportant un élément tubulaire ouvert à ses deux extrémités pourvu d'une collerette à l'une de ses extrémités, cet élément tubulaire ayant des dimensions telles qu'il est apte à être engagé autour de la tige dans la zone entre la pointe et la protubérance, et ayant une longueur inférieure à la longueur de la partie de la tige comprise entre la pointe et la protubérance, l'extrémité de l'élément tubulaire opposée à celle qui est pourvue de la collerette, venant buter contre ladite protubérance dont les dimensions extérieures dépassent la section intérieure initiale de l'élément tubulaire, ledit élément tubulaire étant déformable de manière telle que lorsque la collerette de l'organe de blocage et la protubérance solidaire de la tige sont forcés l'un vers l'autre, ledit élément tubulaire se déforme en bloquant la position de l'organe de blocage par rapport à la tige.

D'une manière avantageuse, la résistance moindre de la zone de rupture permet de détacher la partie de la tige comprise entre ladite zone de rupture et la pointe lorsque la position de l'organe de blocage est bloquée par rapport à la tige.

Avantageusement, la tige est fixée sensiblement perpendiculairement sur une base qui peut notamment être une plaquette. La base peut également consister en un élargissement de l'extrémité de la tige obtenu par déformation de la matière de celle-ci. La base est de préférence munie du côté opposé à la tige d'une couche d'adhésif autocollant.

La tige peut cependant également être fixée directement sur le support, par soudure, par rivetage ou par tout autre moyen.

Avantageusement la tige est cylindrique. La tige peut être faite en métal ou en matière plastique.

Avantageusement la protubérance consiste en un élargissement local de la tige, cet élargissement pouvant être obtenu par déformation de la matière composant la tige, par exemple par pinçage. Toutefois elle peut également consister en une bague, une perle ou une pièce analogue collée ou soudée ou autrement fixée sur la tige autour de laquelle elle est engagée.

Une zone de rupture est située entre ladite protubérance et la pointe. Avantageusement, cette zone de rupture est constituée par une zone de la tige présentant une section réduite.

Le dispositif de fixation comporte également un organe de blocage qui peut être fait en métal, notamment en laiton, en aluminium, en cuivre, en plomb ou en alliage de plomb.

L'organe de blocage peut également être fait en matière plastique.

Le dispositif de fixation peut comporter, en outre, une rondelle pouvant être engagée autour de l'élément tubulaire de l'organe de blocage, mais ayant une ouverture plus petite que la section de la collerette de l'organe de blocage.

Dans un autre mode de réalisation, le dispositif de fixation peut comporter, en outre, un fourreau composé d'un tube cylindrique portant à une de ses extrémités une rondelle, ledit fourreau pouvant être engage autour de l'élément tubulaire de l'organe de blocage, mais ayant une ouverture plus petite que la section de la collerette de l'organe de blocage.

Suivant une première forme d'exécution de l'invention, la protubérance solidaire de la tige est une butée apte à engager l'extrémité de l'élément tubulaire opposée à celle qui est pourvue de la collerette, l'élément tubulaire étant déformable par compression axiale en se plissant et en bloquant ainsi sa position par rapport à la tige.

Dans cette forme d'exécution de l'invention, il est généralement avantageux que la tige présente une surface rugueuse ou nervurée dans la région comprise entre la protubérance et la zone de rupture. De manière plus particulière, la tige peut présenter dans cette région de petites nervures perpendiculaires à l'axe de la tige.

Suivant une autre forme d'exécution de l'invention, la protubérance solidaire de la tige présente une forme qui lui permet d'être engagée dans l'élément tubulaire de l'organe de blocage en déformant radialement cet organe de blocage et en étant ainsi coincée dans celui-ci.

Dans tous les cas, le blocage de la position de l'organe de blocage par rapport à la tige est obtenu grâce à une déformation (axiale ou radiale) de l'élément tubulaire de cet organe de blocage, cette déformation étant provoquée en forçant l'une vers l'autre la collerette de l'organe de blocage et la protubérance solidaire de la tige.

Ceci peut être fait avantageusement au moyen d'un outil semblable à ceux utilisés pour la mise en place de rivets borgnes.

Après blocage en place du dispositif de fixation, la tige est cassée à l'endroit de la zone de rupture. La distance entre ladite protubérance et la zone de rupture est telle que l'extrémité de la partie subsistante de la tige ne dépasse pas la collerette de l'organe de blocage.

Avec le dispositif de fixation suivant l'invention, les conditions requises pour l'isolation des gaines et des toitures sont parfaitement remplies.

Lorsque l'on fixe des matelas isolants notamment sur des gaines de conditionnement d'air, il ne subsiste aucune pointe qui dépasse la collerette de l'organe de blocage et qu'il faudrait replier ou couper.

Lorsque l'on fixe les isolants sur les toitures, le revêtement d'étanchéité n'est pas davantage endommagé car il ne subsiste aucune partie saillante. D'autre part, le dispositif peut être placé pratiquement sur n'importe quel support, sans qu'il soit nécessaire de se limiter à un support de type particulier et sans endommager le support existant.

Par ailleurs, la mise en place de ce dispositif est bien plus aisée que dans les systèmes existant sur le marché et il est également plus économique.

Ces caractéristiques et avantages, ainsi que d'autres, de la présente invention, seront encore mieux compris en se rapportant à la description détaillée ci-après, référence étant faite aux dessins annexés, dans lesquels :
la Fig. 1 est une vue en coupe d'une première forme d'exécution du dispositif de fixation suivant l'invention, avant qu'il soit bloqué en place;
la Fig. 2 est une vue en coupe du dispositif de fixation montré à la Fig. 1, après blocage en place;
la Fig. 3 est une vue en coupe d'une deuxième forme d'exécution du dispositif de fixation, avant qu'il soit bloqué en place;
la Fig. 4 est une vue en coupe du dispositif de fixation montré à la Fig. 3, après blocage en place;
la Fig. 5 est une vue en coupe d'une troisième forme d'exécution du dispositif de fixation, avant qu'il soit bloqué en place, et
la Fig. 6 est une vue en coupe du dispositif de fixation montré à la Fig. 5, après blocage en place.

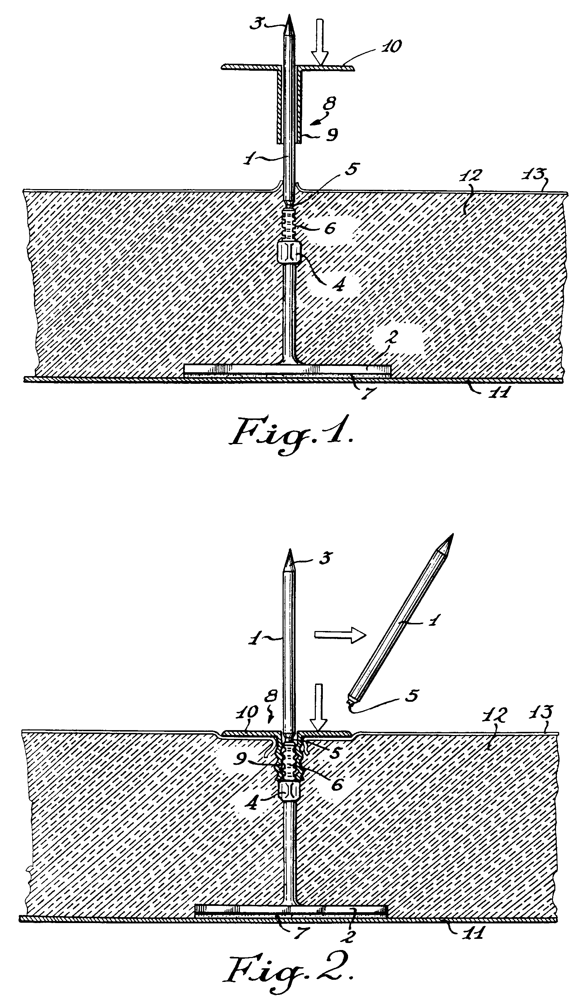

La Fig. 1 représente le dispositif de fixation comportant une tige 1 fixée par une de ses extrémités sur une plaquette 2 et pourvue d'une pointe 3 à son autre extrémité. La tige 1 comporte une protubérance 4 et une zone de rupture 5. La région comprise entre la protubérance 4 et la zone de rupture 5 comporte de petites nervures 6. Du côté opposé à la tige 1, la base 2 est munie d'une couche d'adhésif autocollant 7. Un organe de blocage 8 comportant un élément tubulaire 9 déformable portant une collerette 10 est engagé autour de la tige 1 (mais il n'est pas encore bloqué en place).

La plaquette 2 de la tige 1 est fixée à un support 11 à l'aide de la couche d'adhésif autocollant 7. Bien entendu cette fixation peut se faire également par collage, par soudage, par clouage, par rivetage ou par tout autre moyen.

Une couche de matériau 12 est appliquée sur le support 11 de façon telle que la pointe 3 de la tige 1 dépasse du matériau 12. Le matériau 12 peut être un matériau d'isolation, de décoration ou autre. Le matériau 12 est couvert par un revêtement 13. Ce revêtement 13 est avantageusement une feuille de papier, une feuille d'aluminium ou autre.

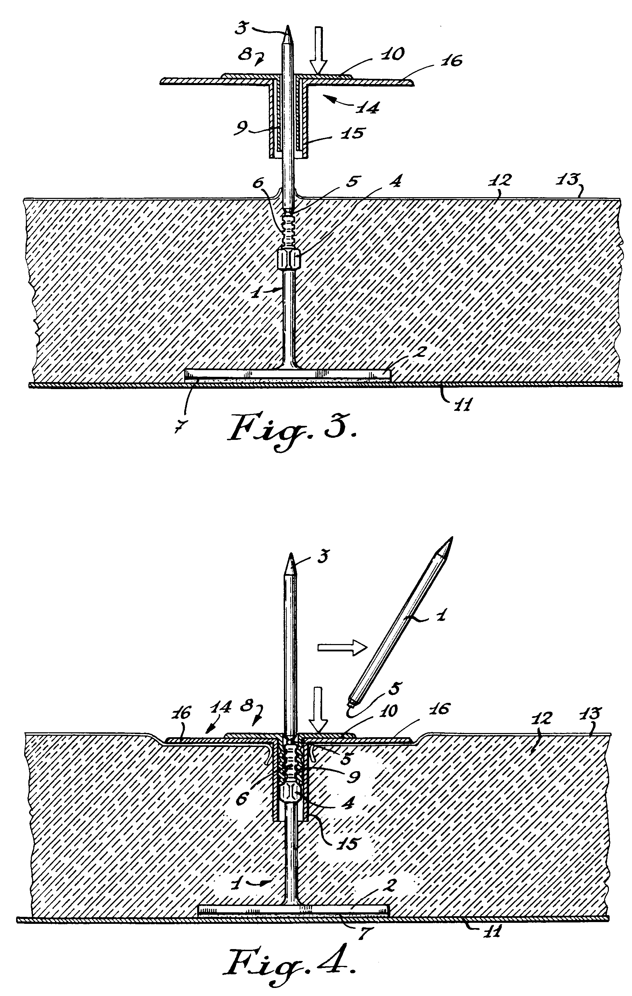

La Fig. 2 représente le dispositif de fixation après blocage en place. Une pression a été exercée sur la collerette 10 de l'organe de blocage 8 et une traction en sens opposé a été exercée sur la tige 1; l'élément tubulaire 9 déformable de l'organe de blocage 8 est venu buter contre la protubérance 4 de la tige 1 et s'est écrasé contre celui-ci.

L'élément tubulaire 9 étant déformé en se plissant, certains plis s'insinuent entre les petites nervures 6 qui se situent dans la région comprise entre la protubérance 4 et la zone de rupture 5 et verrouillent ainsi le dispositif en place. La tige 1 est cassée dans la zone de rupture 5 de façon à ce qu'elle ne dépasse plus du matériau 12.

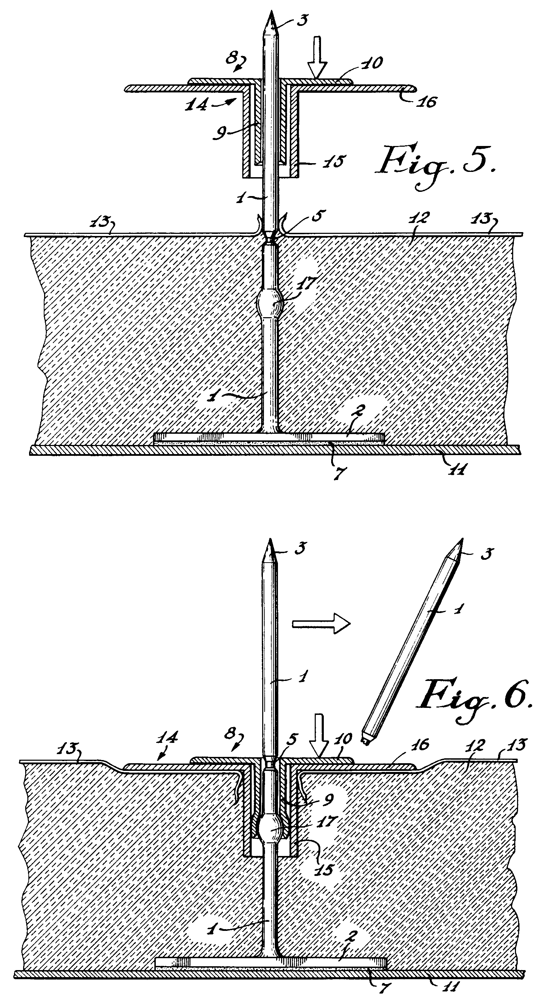

La Fig. 3 représente un dispositif de fixation avec un fourreau 14. La base 2 de la tige 1 est fixée à un support 11 et un matériau 12 est posé sur la tige 1 de façon à ce que la pointe 3 de la tige 1 dépasse du matériau 12.

Un fourreau 14 composé d'un tube cylindrique 15 portant à une de ses extrémités une rondelle 16 est engagé sur la tige 1.

Un organe de blocage 8 comportant un élément tubulaire 9 déformable, doté d'une collerette 10 est engagé également sur la tige de façon à ce que l'élément tubulaire 9 de l'organe de blocage 8 se loge dans le tube cylindrique 15 du fourreau 14 et que la collerette 10 de l'organe de blocage 8 recouvre la rondelle 16 du fourreau 14.

La Fig. 4 représente le même dispositif de fixation après blocage en place.

Une pression a été exercée sur la collerette 10 de l'organe de blocage 8 tout en exerçant une traction sur la tige 1 de façon que l'élément tubulaire 9 déformable de l'organe de blocage 8 vient buter sur la protubérance 4 de la tige 1 et se déforme entre la tige 1 et le tube cylindrique 15 du fourreau 14. L'élément tubulaire 9 déformé pénètre entre les petites nervures 6 qui se situent dans la région comprise entre la protubérance 4 et la zone de rupture 5 et verrouille ainsi le dispositif en place.

En continuant d'exercer une traction sur la tige 1 et une pression sur la collerette 10, la tige 1 est cassée à la zone de rupture 5 de façon que la tige 1 ne dépasse pas le matériau 12.

Les Fig. 5 et 6 qui illustrent encore une autre forme d'exécution de l'invention, sont des vues analogues aux Fig. 3 et 4, et les éléments identiques sont désignés par les mêmes chiffres de référence.

Dans le dispositif de fixation montré aux Fig. 5 et 6, la tige 1 porte toutefois une protubérance 17 en forme d'olive. Lorsqu'une force suffisante est exercée sur la tige 1 et sur l'organe de blocage 8, rapprochant la collerette 10 de la protubérance 17, cette dernière est forcée dans l'élément tubulaire 9 en déformant radialement cet élément tubulaire 9 et en restant ainsi coincé dans celui-ci. On remarquera que, sur la Fig. 6, la partie radialement expansée de l'élément tubulaire 9 est coincée entre la protubérance 17 et la paroi interne du tube 15, assurant ainsi un très bon blocage du dispositif de fixation.

Il est à noter que la protubérance 17 pourrait présenter des formes différentes de celle qui est montrée aux Fig. 5 et 6. Cette protubérance 17 pourrait notamment présenter une forme conique dont la partie étroite est tournée vers la pointe 3 de la tige 1 et la partie large vers la plaquette 2.

## Revendications

1. Dispositif de fixation comportant
- une tige (1) pourvue d'une pointe (3) à une de ses extrémités et pourvue à son autre extrémité d'un moyen apte à le fixer sur un support (11);
- une protubérance (4) solidaire de la tige (1) et située entre les deux extrémités de celle-ci, cette protubérance (4) étant de section transversale supérieure à la section que la tige (1) présente dans la zone comprise entre la protubérance (4) et la pointe (3);
- un organe de blocage (8) comportant un élément tubulaire (9) pourvu d'une collerette (10) à l'une de ses extrémités, cet élément tubulaire (9) ayant des dimensions telles qu'il est apte à être engagé autour de la tige (1) dans la zone entre la pointe (3) et la protubérance (4), les dimensions intérieures de la section initiale de l'élément tubulaire (9) étant inférieures aux dimensions extérieures de la section de la protubérance (4), caractérisé en ce que
(a) l'élément tubulaire est ouvert à ses deux extrémités et a une longueur inférieure à la longueur de la partie de la tige (1) comprise entre la pointe (3) et la protubérance (4),
(b) ledit élément tubulaire (9) étant tel que lorsque la collerette (10) de l'organe de blocage (8) et la protubérance (4) solidaire de la tige (1) sont forcés l'un vers l'autre, l'extrémité de l'élément tubulaire (9) opposée à celle qui est pourvue de la collerette (10) vient buter contre ladite protubérance (4), ledit élément tubulaire (9) se déformant alors autour de la tige (1), en bloquant la position de l'organe de blocage (8) par rapport à la tige (1),
(c) et en ce qu'une zone de rupture (5) qui présente, par rapport au restant de la tige (1), une résistance à la rupture moindre, est prévue sur la tige à un endroit prédéterminé entre ladite protubérance (4) et la pointe (3).

2. Dispositif suivant la revendication 1, caractérisé en ce que la résistance moindre de la zone de rupture (5) permet de détacher la partie de la tige (1) comprise entre ladite zone de rupture (5) et la pointe (3) lorsque la position de l'organe de blocage (8) est bloquée par rapport à la tige (1).

3. Dispositif suivant l'une quelconque des revendications 1 ou 2, caractérisé en ce que la tige (1) est cylindrique.

4. Dispositif suivant l'une quelconque des revendications précédentes, caractérisé en ce que la protubérance (4) consiste en un élargissement local de la tige (1) obtenu par déformation de la matière de celle-ci.

5. Dispositif suivant l'une quelconque des revendications 1 à 3, caractérisé en ce que la protubérance (4) consiste en une bague ou une perle fixée sur la tige (1).

6. Dispositif suivant l'une quelconque des revendications précédentes, caractérisé en ce que la zone de rupture (5) est constituée par une zone de la tige (1) présentant une section réduite.

7. Dispositif suivant l'une quelconque des revendications précédentes, caractérisé en ce que le moyen pour fixer la tige sur un support est une plaquette (2) sur laquelle la tige (1) est fixée sensiblement perpendiculairement.

8. Dispositif suivant la revendication 7, caractérisé en ce que la plaquette (2) est munie du côté opposé à la tige (1) d'une couche d'adhésif autocollant (7).

9. Dispositif suivant l'une quelconque des revendications précédentes, caractérisé en ce que la tige (1) est en métal.

10. Dispositif suivant l'une quelconque des revendications 1 à 8, caractérisé en ce que la tige (1) est en matière plastique.

11. Dispositif suivant l'une quelconque des revendications précédentes, caractérisé en ce que l'organe de blocage (8) est fait en métal.

12. Dispositif suivant la revendication 11, caractérisé en ce que le métal est choisi parmi le laiton, l'aluminium, le cuivre, le plomb, et les alliages de plomb.

13. Dispositif suivant l'une quelconque des revendications 1 à 10, caractérisé en ce que l'organe de blocage (8) est fait en matière plastique.

14. Dispositif suivant l'une quelconque des revendications précédentes, caractérisé en ce qu'il comporte, en outre, une rondelle (16) pouvant être engagée autour de l'élément tubulaire (9) de l'organe de blocage (8), mais ayant une ouverture plus petite que la section de la collerette (10) de l'organe de blocage (8).

15. Dispositif suivant l'une quelconque des revendications 1 à 13, caractérisé en ce qu'il comporte, en outre, un fourreau (14) composé d'un tube (15) cylindrique portant à une de ses extrémités une rondelle (16), ledit fourreau (14) pouvant être engagé autour de l'élément tubulaire (9) de l'organe de blocage (8), mais ayant une ouverture plus petite que la section de la collerette (10) de l'organe de blocage (8).

16. Dispositif suivant l'une quelconque des revendications précédentes, caractérisé en ce que la protubérance (4) solidaire de la tige (1) est une butée apte à engager l'extrémité de l'élément tubulaire (9) opposée à celle qui est pourvue de la collerette (10), l'élément tubulaire (9) étant déformable par compression axiale en se plissant et en bloquant ainsi sa position par rapport à la tige (1).

17. Dispositif suivant la revendication 16, caractérisé en ce que, dans la région comprise entre la protubérance (4) et la zone de rupture (5), la tige (1) présente une surface rugueuse ou nervurée.

18. Dispositif suivant la revendication 17, caractérisé en ce que, dans la région comprise entre la protubérance (4) et la zone de rupture (5), la tige (1) présente de petites nervures perpendiculaires à l'axe de la tige (1).

19. Dispositif suivant l'une quelconque des revendications 1 à 15, caractérisé en ce que la protubérance (4) solidaire de la tige (1) présente une forme qui lui permet d'être engagée dans l'élément tubulaire (9) de l'organe de blocage (8) en déformant radialement cet élément tubulaire (9) et en étant ainsi coincée dans celui-ci.

## Claims

1. Fastening device comprising
- a rod (1) provided with a tip (3) at one of its ends and provided at its other end with a means capable of fastening it to a support (11);
- a projection (4) securely fastened to the rod (1) and situated between the two ends of the latter, this projection (4) having a transverse section which is greater than the section which the rod (1) exhibits in the zone lying between the projection (4) and the tip (3);
- a locking member (8) comprising a tubular element (9) provided with a collar (10) at one of its ends, this tubular element (9) having dimensions such that it is capable of being engaged around the rod (1) in the zone between the tip (3) and the projection (4), the internal dimensions of the initial section of the tubular element (9) being smaller than the external dimensions of the section of the projection (4), characterised in that
(a) the tubular element is open at both ends and has a length which is less than the length of that part of the rod (1) lying between the tip (3) and the projection (4),
(b) the said tubular element (9) being such that when the collar (10) of the locking member (8) and the projection (4) securely fastened to the rod (1) are forced towards one another, the opposite end of the tubular element (9) to the end where the collar (10) is provided, butts up against the said projection (4), the said tubular element (9) then deforming around the rod (1), locking the position of the locking member (8) with respect to the rod (1),
(c) and in that a rupture zone (5) which has a lower rupture strength by comparison with the rest of the rod (1) is provided on the rod at a predetermined point between the said projection (4) and the tip (3).

2. Device according to Claim 1, characterised in that the lower strength of the rupture zone (5) allows that part of the rod (1) lying between the said rupture zone (5) and the tip (3) to be detached when the position of the locking member (8) is locked with respect to the rod (1).

3. Device according to either one of Claims 1 and 2, characterised in that the rod (1) is cylindrical.

4. Device according to any one of the preceding claims, characterised in that the projection (4) consists of a local widening of the rod (1) obtained by deforming the material of the latter.

5. Device according to any one of Claims 1 to 3, characterised in that the projection (4) consists of a ring or a bead fixed to the rod (1).

6. Device according to any one of the preceding claims, characterised in that the rupture zone (5) consists of a zone of the rod (1) having a reduced section.

7. Device according to any one of the preceding claims, characterised in that the means for fastening the rod to a support is a small plate (2) to which the rod (1) is fastened substantially perpendicularly.

8. Device according to Claim 7, characterised in that the small plate (2) is fitted, on the side opposite the rod (1), with a self-adhesive layer (7).

9. Device according to any one of the preceding claims, characterised in that the rod (1) is made of metal.

10. Device according to any one of Claims 1 to 8, characterised in that the rod (1) is made of plastic.

11. Device according to any one of the preceding claims, characterised in that the locking member (8) is made from metal.

12. Device according to Claim 11, characterised in that the metal is chosen from amongst brass, aluminium, copper, lead and lead alloys.

13. Device according to any one of Claims 1 to 10, characterised in that the locking member (8) is made from plastic.

14. Device according to any one of the preceding claims, characterised in that it further comprises a washer (16) which can be engaged around the tubular element (9) of the locking member (8) but has an opening which is smaller than the section of the collar (10) of the locking member (8).

15. Device according to any one of Claims 1 to 13, characterised in that it further comprises a sheath (14) composed of a cylindrical tube (15) carrying a washer (16) at one of its ends, it being possible for the said sheath (14) to be engaged around the tubular element (9) of the locking member (8), but having an opening which is smaller than the section of the collar (10) of the locking member (8).

16. Device according to any one of the preceding claims, characterised in that the projection (4) securely fastened to the rod (1) is a stop able to engage the end of the tubular element (9) opposite the end which is provided with the collar (10), the tubular element (9) being deformable by axial compression, thereby folding and thus locking its position with respect to the rod (1).

17. Device according to Claim 16, characterised in that, in the region lying between the projection (4) and the rupture zone (5), the rod (1) has a rough or ribbed surface.

18. Device according to Claim 17, characterised in that, in the region lying between the projection (4) and the rupture zone (5), the rod (1) has small ribs perpendicular to the axis of the rod (1).

19. Device according to any one of Claims 1 to 15, characterised in that the projection (4) securely fastened to the rod (1) has a shape which allows it to be engaged in the tubular element (9) of the locking member (8), thereby deforming this tubular element (9) radially and thus becoming wedged in it.

## Patentansprüche

1. Befestigungsvorrichtung, umfassend
- einen Schaft (1), der an seinem einen Ende eine Spitze (3) und an seinem anderen Ende ein Mittel zum Befestigen auf einer Auflage (11) aufweist,
- eine mit dem Schaft (1) aus einem Stück bestehende und zwischen dessen beiden Enden angeordnete Ausstülpung (4), die gegenüber dem Querschnitt, den der Schaft (1) in dem Gebiet zwischen ihr und der Spitze (3) darstellt, einen größeren Querschnitt aufweist,
- ein Verriegelungsorgan (8) mit einem an einem seiner Enden einen Kragen (10) aufweisenden rohrförmigen Element (9), das so bemessen ist, daß es in dem Gebiet zwischen der Spitze (3) und der Ausstülpung (4) um den Schaft (1) herum erfaßt werden kann, wobei die Innenabmessungen des Anfangsabschnittes des rohrförmigen Elementes gegenüber den Außenabmessungen des Querschnittes der Ausstülpung (4) kleiner sind,
dadurch gekennzeichnet, daß
a) das rohrförmige Element an seinen beiden Enden offen ist und eine Länge unter der Länge des zwischen der Spitze (3) und der Ausstülpung (4) befindlichen Teiles des Schaftes (1) aufweist,
b) das besagte rohrförmige Element (9) so beschaffen ist, daß, wenn der Kragen (10) des Verriegelungsorgans und die mit dem Schaft (1) aus einem Stück bestehende Ausstülpung (4) gegeneinander gedrückt werden, das Ende des rohrförmigen Elementes (9) gegenüber demjenigen, das den Kragen (10) aufweist, an der besagten Ausstülpung (4) anstößt, wobei sich das besagte rohrförmige Element (9) dann unter Verriegeln der Lage des Verriegelungsorgans (8) gegenüber dem Schaft (1) um den Schaft (1) verformt, und
c) eine Bruchzone (5), die gegenüber dem übrigen Teil des Schaftes (1) einen geringen Bruchwiderstand aufweist, auf dem Schaft an einer vorbestimmten Stelle zwischen der besagten Ausstülpung (4) und der Spitze (3) vorgesehen ist.

2. Vorrichtung nach Anspruch 1, dadurch gekennzeichnet, daß der geringste Widerstand der Bruchzone (5) ein Abtrennen des zwischen der besagten Bruchzone (5) und der Spitze (3) befindlichen Teils des Schaftes (1) zuläßt, wenn die Lage des Verriegelungsorgans (8) gegenüber dem Schaft (1) verriegelt ist.

3. Vorrichtung nach irgendeinem der Ansprüche 1 oder 2, dadurch gekennzeichnet, daß der Schaft (1) zylinderförmig ist.

4. Vorrichtung nach irgendeinem der vorhergehenden Ansprüche, dadurch gekennzeichnet, daß die Ausstülpung (4) aus einer durch Verformen des Materials des Schaftes (1) erhaltenen örtlichen Vergrößerung besteht.

5. Vorrichtung nach irgendeinem der Ansprüche 1 bis 3, dadurch gekennzeichnet, daß die Ausstülpung (4) aus einem Ring oder einer am Schaft (1) befestigten Perle besteht.

6. Vorrichtung nach irgendeinem der vorhergehenden Ansprüche, dadurch gekennzeichnet, daß die Bruchzone (5) durch ein einen verminderten Querschnitt aufweisendes Gebiet des Schaftes (1) gebildet wird.

7. Vorrichtung nach irgendeinem der vorhergehenden Ansprüche, dadurch gekennzeichnet, daß das Mittel zum Befestigen des Schaftes auf einer Auflage ein Plättchen (2) ist, auf dem der Schaft (1) unter etwa 90° befestigt ist.

8. Vorrichtung nach Anspruch 7, dadurch gekennzeichnet, daß das Plättchen (2) auf der vom Schaft (1) abgelegenen Seite einen Belag (7) aus selbstklebendem Klebstoff aufweist.

9. Vorrichtung nach irgendeinem der vorhergehenden Ansprüche, dadurch gekennzeichnet, daß der Schaft (1) aus Metall besteht.

10. Vorrichtung nach irgendeinem der Ansprüche 1 bis 8, dadurch gekennzeichnet, daß der Schaft (1) aus Kunststoff besteht.

11. Vorrichtung nach irgendeinem der vorhergehenden Ansprüche, dadurch gekennzeichnet, daß das Verriegelungsorgan (8) aus Metall hergestellt ist.

12. Vorrichtung nach Anspruch 11, dadurch gekennzeichnet, daß das Metall unter Messing, Aluminium, Kupfer, Blei und Bleilegierungen ausgewählt ist.

13. Vorrichtung nach irgendeinem der Ansprüche 1 bis 10, dadurch gekennzeichnet, daß das Verriegelungsorgan (8) aus Kunststoff hergestellt ist.

14. Vorrichtung nach irgendeinem der vorhergehenden Ansprüche, dadurch gekennzeichnet, daß sie unter anderem eine um das rohrförmige Element (9) des Verriegelungsorgans (8) legbare Unterlegscheibe (16) aufweist, die aber eine kleinere Öffnung als der Querschnitt des Kragens (10) des Verriegelungsorgans (8) aufweist.

15. Vorrichtung nach irgendeinem der Ansprüche 1 bis 13, dadurch gekennzeichnet, daß sie unter anderem eine aus einem zylinderförmigen Rohr (15) bestehende Hülse (14) aufweist, die an einem ihrer Enden eine Unterlegscheibe (16) trägt, die besagte Hülse (14) um das rohrförmige Element (9) des Verriegelungsorgans (8) herum erfaßt werden kann, aber eine kleinere Öffnung als der Querschnitt des Kragens (10) des Verriegelungsorgans (8) aufweist.

16. Vorrichtung nach irgendeinem der vorhergehenden Ansprüche, dadurch gekennzeichnet, daß die mit dem Schaft (1) aus einem Stück bestehende Ausstülpung (4) ein Anschlag ist, der an dem Ende des rohrförmigen Elementes (9) anliegen kann, das von dem mit dem Kragen (10) versehenen Ende abliegt, wobei das rohrförmige Element (9) durch Axialdruck unter Falten verformbar ist und damit seine Lage gegenüber dem Schaft (1) verriegelt.

17. Vorrichtung nach Anspruch 16, dadurch gekennzeichnet, daß der Schaft (1) in dem Gebiet zwischen der Ausstülpung (4) und der Bruchzone (5) eine unebene oder gerippte Oberfläche darstellt.

18. Vorrichtung nach Anspruch 17, dadurch gekennzeichnet, daß der Schaft (1) in dem Gebiet zwischen der Ausstülpung (4) und der Bruchzone (5) kleine, zu der Achse des Schaftes (1) senkrechte Rippen aufweist.

19. Vorrichtung nach irgendeinem der Ansprüche 1 bis 15, dadurch gekennzeichnet, daß die mit dem Schaft (1) aus einem Stück bestehende Ausstülpung (4) eine Form darstellt, die in dem rohrförmigen Element (9) des Verriegelungsorgans (8) unter radialer Verformung dieses rohrförmigen Elementes (9) erfaßt werden kann und damit in diesem eingeklemmt wird.
